# EUROPÄISCHE PATENTSCHRIFT

(11) **EP 0 706 292 B1**
(45) Veröffentlichungstag und Bekanntmachung des Hinweises auf die Patenterteilung: **22.12.1999**
(21) Anmeldenummer: 95114065.6
(22) Anmeldetag: 07.09.1995
(51) Int. Cl.: H04N 7/173

(54) **Schaltungsanordnung zur Steuerung der Übertragung von Informationen für interaktive Dienste**
Circuitry for controlling the transmission of information for interactive services
Circuit pour commander la transmission d'information de services interactifs

(30) Priorität: 29.09.1994 DE 4434918
(43) Veröffentlichungstag der Anmeldung: 10.04.1996
(73) Patentinhaber: SIEMENS AKTIENGESELLSCHAFT, 80333 München (DE)
(72) Erfinder: Möhrmann, Karl-Heinz, Dipl.-Ing., D-81369 München (DE)

(56) Entgegenhaltungen:
- EP-A- 0 419 137
- WO-A-94/16534

## Beschreibung

Die Erfindung betrifft eine Schaltungsanordnung gemäß dem Oberbegriff des Patentanspruchs 1.

Für zeitgemäße Kabelfernsehanwendungen werden Koaxialnetze verwendet, über die analoge Informationssignale in Form von Fernsehsignalen zu dem jeweiligen Teilnehmer hin übertragen werden. Die Übertragung erfolgt dabei über ein einheitliches Kanalraster, in das die Fernsehsignale eingefügt sind. Über diese bereits existierenden Koaxialnetze können auch Informationssignale von verschiedenen Schmalband - oder Breitbanddiensten, wie beispielsweise Telefonie, interaktivem Videoabruf (Video on Demand) oder anderen interaktiven Videodiensten (Teleshopping, Teleeducation, usw.), übertragen werden. Dabei besteht das Erfordernis, diese beispielsweise als ATM-Informationssignale ausgebildeten Informationen allen Teilnehmern in dem angesprochenen einheitlichen Kanalraster zur Verfügung zu stellen.

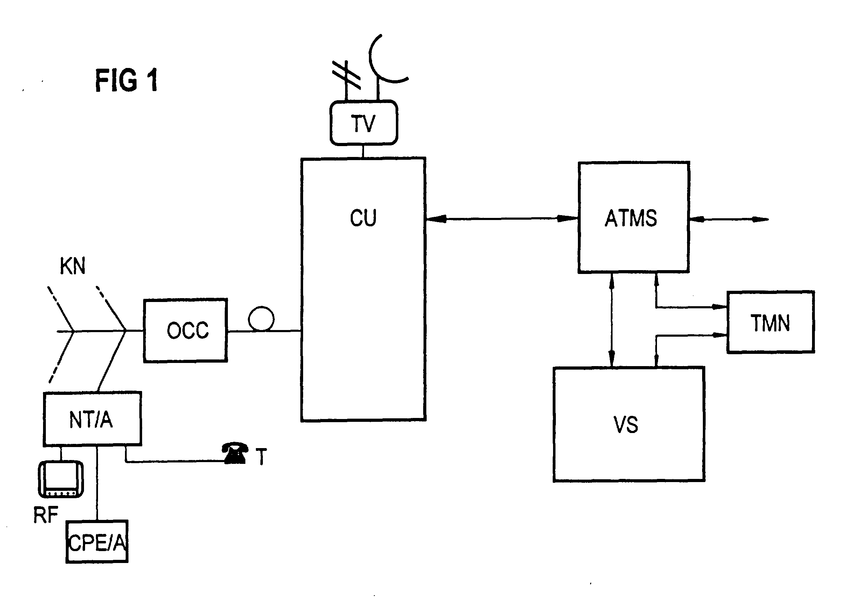

In FIG 1 ist beispielhaft eine Netzstruktur aufgezeigt, auf der ein derartiges Verfahren nach dem Stand der Technik zum Ablauf gelangt:

Dort ist links von einer Kopfstelle (Connection Unit CU) ein Koaxialnetz KN in der üblichen Baumstruktur mit vorgeschalteter Anführstrecke aufgezeigt,wobei die Übertragung der Informationssignale auf optischem und elektrischem Wege erfolgt. Das optische Übertragungsmedium ist jeweils mit einem Kreis gekennzeichnet, während das dicker gezeichnete elektrische Übertragungskabel keine Kennzeichnung aufweist. Weiterhin ist eine Einrichtung OCC aufgezeigt, die dafür Sorge trägt, daß elektische Informationssignale in optische umgewandelt werden und umgekehrt. Teilnehmerseitig ist das Koaxialnetz KN mit einer Mehrzahl von Netzabschlußeinrichtungen NT/A versehen, die entweder als Set-Top-Boxen ausgebildet sein können, wobei FIG 1 zum besseren Verständnis lediglich eine dieser Netzabschlußeinrichtungen offenbart. Deren Aufgabe besteht darin, die empfangenen bzw. ausgesandten Informationssignale derart zu modifizieren, daß ein Anschluß herkömmlicher Endgeräte ermöglicht wird. In FIG 1 sind dies beispielhaft die Endgeräte RF, CPE/A sowie T, wobei es sich beim Endgerät RF um ein übliches Fernsehendgerät, beim Endgerät CPE/A um eine ATM-Endeinrichtung wie z.B. einen Computer oder eine Workstation und beim Endgerät T um ein analoges oder digitales Telefon handelt. Im Koaxialnetz KN werden die Verteil-TV-Signale analog übertragen, indem diese über eine Einrichtung TV in die Kopfstelle CU eingespeist und von derselben allen angeschlossenen Teilnehmern über das Koaxialnetz KN zugeführt werden. Die Fernsehsignale können dann von dem an der Netzabschlußeinrichtung angeschlossenen Fernsehempfänger RF in bekannter Weise empfangen werden.

Weiterhin werden nach FIG 1 bidirektional ATM-Informationssignale übertragen. Diese werden beispielsweise von einer als Video Server VS ausgestalteten Diensteeinrichtung über eine ATM-Vermittlungseinrichtung ATMS der Kopfstelle CU zugeführt, wobei die Steuerung dieser Vorgänge von einer zentralen Steuereinrichtung TMN vorgenommen wird. Es wird gegenwärtig vorgeschlagen, die Übertragung dieser ATM-Informationssignale in schmalen Kanälen entsprechend dem Kanalraster für TV-Anwendungen vorzunehmen.

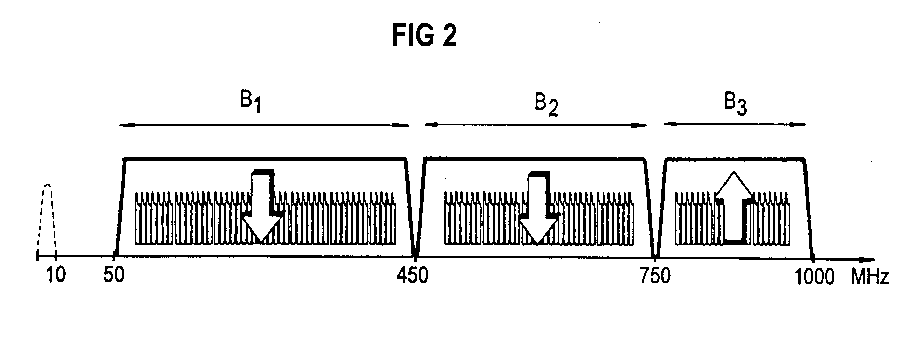

In FIG 2 ist eine Möglichkeit aufgezeigt, wie eine derartige Übertragung durchgeführt werden kann. Dabei wird die Übertragung der analogen Informationssignale in Form von Fernsehsignalen für Kabelfernsehanwendungen in einem Frequenzbereich B₁ zwischen 50 und 450 MHz vorgenommen. Jedes Fernsehsignal belegt einen Kanal mit einer Bandbreite von 8 MHz. In dieses Kanalraster von 8 MHz werden oberhalb des Fernsehbandes nun die digitalen Downstream - bzw. Upstream-Signale der interaktiven Dienste eingefügt. Dabei werden die Downstream-Signale beispielsweise in einem Frequenzband B₂ zwischen 450 und 750 MHz sowie die Upstream-Signale in einem Frequenzband B₃ zwischen 750 und 1000 MHz übertragen. Diese Vorgehensweise erfordert jedoch eine Zuordnung der für einen bestimmten Teilnehmer vorgesehen Informationssignale zu bestimmten übertragungskanälen des Kanalrasters. Generell wird diese Zuordnung von einem zentralen Steuerrechner des Netzkontrollzentrums TMN in Verbindung mit den lokalen Steuereinrichtungen SEC der Kopfstelle CU und der Netzabschlußeinrichtung NT/A durchgeführt. Damit müssen aber die hierzu erforderlichen Zustands - und Steuerinformationen in einer zu diesem Zweck vorgesehenen Tabelle in dem zentralen Steuerrechner des Netzkontrollzentrums abgelegt sein. Ein Teilnehmer muß somit vor Aufbau einer Verbindung zu einer Diensteeinrichtung die entsprecheden Informationen von diesem Rechner erhalten, um damit die Empfangseinrichtung der Netzabschlußeinrichtung auf die entsprechenden Kanäle einzustellen.

Problematisch an einer derartigen Vorgehensweise ist jedoch, daß der zentrale Steuerrechner des Netzkontrollzentrums damit einer sehr hohen Belastung unterliegt und der Aufwand entsprechend hoch ist.

Aus der internationalen Patentanmeldung WO 94/16534 ist eine Neztstruktur bekannt, über die Informationen Teilnehmerendeinrichtungen zugeführt werden. Dies erfolgt über ATM-Zellen, die in einem Übertragungszyklus gesendet werden.

Der Erfindung liegt die Aufgabe zugrunde, eine Schaltungsanordnung anzugeben, mittels der die Zuordnung von Informationen zu Übertragungskanälen in effizienter Weise durchführbar ist.

Diese Aufgabe wird, ausgehend vom Oberbegriff des Patentanspruchs 1, durch die im kennzeichnenden Teil angegebenen Merkmale gelöst.

Diensteeinrichtungen und wenigstens einem der Teilnehmer von peripheren Steuereinrichtungen der Kopfstelle bzw. der betreffenden Netzabschlußeinrichtung durchgeführt wird. Damit ist insbesondere der Vorteil verbunden,daß der zentrale Rechner des Netzkontrollzentrums von diesen Aufgaben entlastet ist.

Besondere Ausgestaltungen der Erfindung sind in den Unteransprüchen angegeben.

Gemäß Anspruch 2 ist vorgesehen, daß je nach übertragungsrichtung von der peripheren Steuereinrichtung der wenigstens einen Kopfstelle bzw. von der peripheren Steuereinrichtung der jeweiligen Netzabschlußeinrichtung die zu übertragenden Informationen freien Übertragungskanälen zugeordnet und in diese eingefügt werden, und daß die Zuordnungen zum einen in dafür vorgesehenen Tabellen in der peripheren Steuereinrichtung abgespeichert und zum anderen über interne Kanäle der anderen peripheren Steuereinrichtung mitgeteilt werden, woraufhin diese eine zugehörige interne Sende- beziehungsweise Empfangseinrichtung auf diese Übertragungskanäle einstellt. Damit ist der Vorteil verbunden, daß die als Tuner ausgebildete Empfangseinrichtung unmittelbar auf den betreffenden Kanal eingestellt werden kann.

Gemäß Anspruch 3 ist vorgesehen, daß je nach übertragungsrichtung von der peripheren Steuereinrichtung der wenigstens einen Kopfstelle bzw. von der peripheren Steuereinrichtung der jeweiligen Netzabschlußeinrichtung eine zugehörige Empfangseinrichtung auf den Übertragungskanal eingestellt wird, der zu Beginn der Übertragung nach Maßgabe eines zyklischen Abfragens aller Übertragungskanäle die zugeordnete Informationen enthält. Damit ist der Vorteil verbunden, daß der interne Steuerkanal für andere Übertragungszwecke verwendet werden kann, wobei das zyklische Abfragen keine Einschränkung der Dynamik bedeutet, da diese Vorgänge lediglich zu Beginn der Übertragung durchgeführt werden. Dies ist möglich, da die betreffenden Kanäle in den beiden Richtungen für diese Verbindung stets mit entsprechenden Absende- beziehungsweise Empfängeradressen versehene Informationssignale enthalten, welche diesem Teilnehmer zugeordnet sind.

Gemäß Anspruch 4 ist vorgesehen, daß die wenigstens eine Diensteeinrichtung ein Video Server ist, um Videoabruf in einem Netz gemäß Figur 1 anbieten zu können.

Gemäß Anspruch 5 ist vorgesehen, daß die Netzstruktur zwischen der wenigstens einen Kopfstelle und der Mehrzahl von Netzabschlußeinrichtungen ein Koaxialnetz in Baumstruktur gegebenenfalls mit einer vorgeschalteten optischen Feederstrecke, ist. Damit ist der Vorteil verbunden, daß bereits existierende Netzstrukturen mitverwendet werden können.

Gemäß Anspruch 6 ist vorgesehen, daß die von der Diensteeinrichtung ausgehenden Informationen ATM-Informationssignale sind. Auch die zwischen der Kopfstelle und den Netzabschlußeinrichtungen übertragenen Signale können gemäß Anspruch 7 das ATM-Format aufweisen, allerdings mit Ausnahme der im Band B1 übertragenen Verteilsignale.

Die Erfindung wird im folgenden anhand eines Ausführungsbeispiels näher erläutert.

Es zeigen:
- FIG 1: eine Netzstruktur nach dem Stand der Technik
- FIG 2: eine Möglichkeit der Übertragung von Informationssignalen der interaktiven Dienste
- FIG 3: die erfindungsgemäße Schaltungsanordnung auf der Sendeseite
- FIG 4: die erfindungsgemäße Schaltungsanordnung auf der Empfangsseite

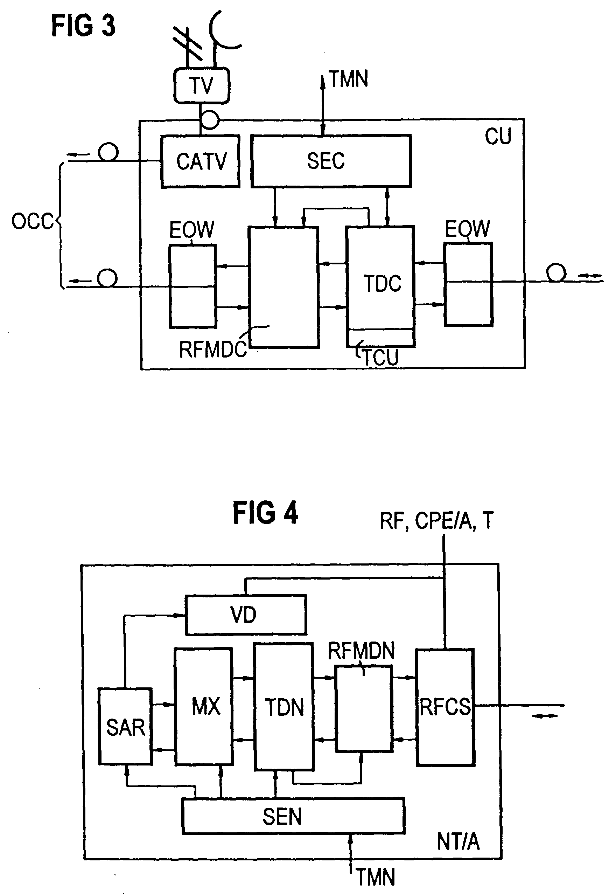

In FIG 3 sind die Verhältnisse in der Kopfstelle CU aufgezeigt. Darin ist offenbart, wie die analogen Fernsehverteilsignale über die Einrichtungen TV sowie CATV in das Kabelnetz KN eingespeist werden. Die Übertragung derselben zwischen der Einrichtung TV und der Einrichtung CATV erfolgt über optische Leitungen. Dies ist in FIG 3 mit einem die betreffende Übertragungsleitung markierenden Kreis gekennzeichnet. Die Übertragung kann aber auch koaxial erfolgen. Von der Einrichtung CATV werden die Fernsehsignale ebenfalls über eine optische Übertragungsleitung einer Einrichtung OCC zugeführt, die die optischen Fernsehsignale in elektrische Fernsehsignale umwandelt, bevor diese über das Koaxialnetz KN dem Teilnehmer zugeführt werden.

Unabhängig davon werden ATM-Informationssignale interaktiver Dienste (wie z.B. Informationssignale eines Video Servers VS), die in eine Rahmenstruktur eingefügt sind, über einen elektrooptischen Wandler EOW einer Einrichtung TDC zugeführt (Downstream-Signale). Bei dieser Einrichtung handelt es sich um das Bit Transport System TDM/TDMA, deren Aufgabe darin besteht, die Informationsübertragung in einer Punkt-zu-Multipunkt-Übertragung zu steuern. Zunächst wird die ATM-Zelle der Rahmenstruktur entnommen und der Zellenkopf ausgewertet. Im weiteren findet hier eine Überprüfung daraufhin statt, welche der Kanäle des hier erzeugten Kanalrasters noch freie Kapazität zur Verfügung haben. Ist ein freier Kanal aufgefunden, werden die einem Teilnehmer zugeordneten ATM-Zellen in denselben eingefügt. Die damit verbundenen Zuordnungen Teilnehmer-Übertragungskanal werden in einer Tabelle TCU der Einrichtung TDC abgespeichert, wobei die Tabelle TCU ständig aktualisiert wird.

Die Zuordnung der ATM-Informationssignale der einzelnen Teilnehmer zu den schmalbandigen HF-Übertragungskanälen wird somit in der Einrichtung TDC und damit dezentral durchgeführt.

Der zentrale Steuerrechner des Netzkontrollzentrums TMN ist damit nicht belastet.

Das Bit-Transport-System TDM/TDMA zwischen der Kopfstelle CU und den einzelnen Netzanschlußeinrichtungen NT/A weist sowieso einen übertragungstechnischen Overhead auf. Dies bedeutet, daß zusätzliche Bits in einem internen Steuerkanal mitübertragen werden, über den systeminterne Informationen wie z.B. Steuerinformationen ausgetauscht werden. Damit kann die Steuereinrichtung TDC der Kopfstelle CU, die das TDM/TDMA System steuert, anhand der ständig aktualisierten Tabelle TCU den Belegungsgrad der einzelnen HF-Kanäle ermitteln. Damit können dann die einzelnen Informationssignale in ein zugeordnetes Multiplexsignal eingefügt und in einen freien oder nicht voll belegten HF-Kanal eingefügt werden. Zusätzlich wird der Netzabschlußeinrichtung NT/A über den Overhead mitgeteilt, in welchem Kanal die übertragene Information ankommt.

Die Modulationsvorgänge werden in einer Einrichtung RFMDC durchgeführt. Dort wird das in der Einrichtung TDC modifizierte Informationssignal in einen Frequenzbereich nach FIG 2 umgesetzt, und anschließend über einen weiteren elektrooptischen Wandler EOW der Feederleitung zur Einrichtung OCC übergeben, die die Umsetzung in elekrische Signale und die Einspeisung in das Koaxialnetz KN vornimmt. Das betreffende Informationssignal wird nun in dem in der Einrichtung TDC zugewiesenen Kanal der Netzabschlußeinrichtung des betreffenden Teilnehmers zugeführt.

In entsprechender Weise können auch umgekehrt Informationssignale von einer Netzabschlußeinrichtung NT/A zur Kopfstelle CU übertragen werden (Upstream-Übertragung). Dabei ist zu beachten, daß zu einer bestimmten Zeit nur ein einziger Teilnehmer senden darf, um ein Interferieren der von mehreren Teilnehmern ausgehenden Informationssignale in der Kopfstelle CU zu vermeiden, was zusätzlich noch durch unterschiedliche Signallaufzeiten erschwert wird. Daher ist eine Burst-Übertragung vorgesehen,wobei der jeweilige Startzeitpunkt eines Burst in der Netzabschlußeinrichtung NT/A von der Kopf stelle CU aus derart gesteuert wird, daß die Upstream-Signale der einzelnen Teilnehmer geordnet und ohne gegenseitige Überlappung in der Kopfstelle CU eintreffen. Bei Übertragung im ATM-Format enthält jeder Burst zweckmäßig eine ATM-Zelle. Die Steuereinrichtung SEC der Kopfstelle CU ermittelt mit Hilfe der in der Tabelle TCU abgespeicherten Information, welche Kanäle noch freie Kapazität aufweisen. Ist ein solcher Kanal aufgefunden, teilt die Steuereinrichtung SEC diese Information der entsprechenden Netzabschlußeinrichtung NT/A mit, die nach Maßgabe der erhaltenen Information ihre Bursts in dem betreffenden Kanal sendet, und stellt ihre Einrichtung RFMDC auf den Kanal ein. Die Einrichtung TDC beschränkt sich jeweils auf den Inhalt eines Kanals, alle Kanäle werden von der Einrichtung TDC parallel und gleichzeitig aber unabhängig behandelt. Die den einzelnen Kanälen entnommenen Informationssignale werden in der Kopfstelle CU in geeigneter Weise zusammengefaßt und an den ATM-Switch ATMS weitergeleitet.

In FIG 4 sind die entsprechenden Verhältnisse in der Netzabschlußeinrichtung NT/A aufgezeigt. Dort ist offenbart, daß die über das Koaxialnetz KN ankommenden, in ein Kanalraster eingefügten ATM-Informationssignale eingangsseitig einer eine Filterfunktion aufweisenden Einrichtung RFCS übergeben werden. Deren Aufgabe besteht darin, die in demselben Kanalraster mitübertragenen analogen Fernsehsignale (FIG 2) von den ATM-Informationssignalen der interaktiven Dienste zu trennen. Die analogen Fernsehsignale werden dann umgehend dem Fernsehgerät RF zugeführt. Die die interaktiven Dienste betreffenden Down-Stream-ATM-Informationssignale werden einer nachgeschalteten Einrichtung RFMDN zugeführt. Dort werden die Informationssignale im Basisband wieder zur Verfügung gestellt und im weiteren einer Einrichtung TDN übergeben. Die entsprechenden Vorgänge laufen sinngemäß für die Upstream-Übertragung ab.

Die ATM-Informationssignale werden nun in der Einrichtung TDN gefiltert, d.h. aus dem ankommenden Strom von ATM-Informationssignalen werden nur die eigenen ATM-Zellen einer nachgeschalteten Einrichtung MX übergeben, die für den an dieser Netzabschlußeinrichtung NT/A angeschlossenen Teilnehmer bestimmt sind. Die Einrichtung MX weist Multiplex/Demultiplex-Funktion auf und sortiert die Informationssignale nach der Art der Endeinrichtung, wie z.B. Telefon oder Workstation, und übergibt dieselben einer Einrichtung SAR. Dort werden die ATM- Informationssignale in einen kontinuierlichen Datenstrom rückgewandelt und einem Video-Decoder VD übergeben, der ein für das Fernsehgerät lesbares analoges Fernsehsignal erzeugt. Die kompletten Vorgänge werden auch hier von einer zugeordneten Steuereinrichtung SEN überwacht und gesteuert. Die Übertragung von Informationen in der Rückrichtung erfolgt in umgekehrter Reihenfolge und wurde bereits im Zusammenhang mit FIG 3 angesprochen.

In einer Ausgestaltung der Erfindung wird den Netzabschlußeinrichtungen NT/A nicht separat über den internen Steuerkanal mitgeteilt, in welchem Kanal die ATM-Informationssignale übertragen werden. In diesem Fall müssen in der Einrichtung TDN der Netzabschlußeinrichtung NT/A am Anfang der Verbindung zum Video Server VS alle Kanäle des eintreffenden Kanalrasters daraufhin untersucht werden, in welchem dieser Kanäle die für den betreffenden Teilnehmer vorgesehenen Informationen eingefügt sind. Ist der betreffende Kanal aufgefunden, wird die in der Einrichtung RFMDN enthaltenen Tunereinrichtung auf denselben aufsynchronisiert. Diese Vorgehensweise ist vom Aufwand her durchaus tolerierbar, da die damit verbundenen Suchvorgänge nur am Anfang der Übertragung durchgeführt werden müssen.

## Patentansprüche

1. Schaltungsanordnung zur Steuerung der Übertragung von Informationen für interaktive Dienste, mit einer ein Netzkontrollzentrum (TMN) aufweisenden Netzstruktur, in die wenigstens ein Netzknoten (ATMS), wenigstens eine Diensteeinrichtung (VS) sowie wenigstens eine, mit einer Mehrzahl von Netzanschlußeinrichtungen (NT/A) sowie diesen zugeordneten Teilnehmereinrichtungen verbundene Kopf stelle (CU) eingefügt sind, wobei zwischen der wenigstens einen Diensteeinrichtung (VS) und wenigstens einer der Mehrzahl von Teilnehmereinrichtungen Informationen zumindest streckenweise in einem einheitlichen Kanalraster übertragen werden,
**dadurch gekennzeichnet,**
daß die Steuerung der Übertragung der Informationen zwischen der jeweiligen Diensteeinrichtung (VS) und der jeweiligen Teilnehmereinrichtung von jeweils einer, in der wenigstens einen Kopf stelle (CU) sowie in der der jeweiligen Teilnehmereinrichtung zugeordneten Netzabschlußeinrichtung (NT/A) vorgesehenen peripheren Steuereinrichtung (TDC, TDN) durchgeführt wird.

2. Schaltungsanordnung nach Anspruch 1
**dadurch gekennzeichnet,**
daß je nach Übertragungsrichtung von der peripheren Steuereinrichtung (TDC) der wenigstens einen Kopfstelle (CU) bzw. von der peripheren Steuereinrichtung (TDN) der jeweiligen Netzabschlußeinrichtung (NT/A) die zu übertragenden Informationen freien Übertragungskanälen zugeordnet und in diese eingefügt werden, und
daß die Zuordnungen zum einen in dafür vorgesehenen Tabellen in der peripheren Steuereinrichtung (TDC) abgespeichert und zum anderen über interne Kanäle der anderen peripheren Steuereinrichtung (TDN) mitgeteilt werden, woraufhin diese eine zugehörige interne Sende- beziehungsweise Empfangseinrichtung auf diese Übertragungskanäle einstellt.

3. Schaltungsanordnung nach Anspruch 1
**dadurch gekennzeichnet**,
daß je nach Übertragungsrichtung von der peripheren Steuereinrichtung (TDC) der wenigstens einen Kopfstelle (CU) bzw. von der peripheren Steuereinrichtung (TDN) der jeweiligen Netzabschlußeinrichtung (NT/A) eine zugehörige Empfangseinrichtung auf den Übertragungskanal eingestellt wird, der zu Beginn der Übertragung nach Maßgabe eines zyklischen Abfragens aller Übertragungskanäle die zugeordnete Informationen enthält.

4. Schaltungsanordnung nach Anspruch 1,2 oder 3
**dadurch gekennzeichnet**,
daß die wenigstens eine Diensteeinrichtung ein Video Server (VS) ist.

5. Schaltungsanordnung nach Anspruch 1
**dadurch gekennzeichnet**,
daß die Netzstruktur zwischen der wenigstens einen Kopfstelle (CU) und der Mehrzahl von Netzabschlußeinrichtungen (NT/A) ein Koaxialnetz (KN) in Baumstruktur mit einer optischen Feederstrecke ist.

6. Schaltungsanordnung nach Anspruch 1 bis 5
**dadurch gekennzeichnet**,
daß die von der Diensteeinrichtung (VS) ausgehenden Informationen ATM-Informationssignale sind.

7. Schaltungsanordnung nach Anspruch 6,
**dadurch gekennzeichnet**,
daß die zwischen der wenigstens einen Kopfstelle (CU) und der Mehrzahl von Netzabschlußeinrichtungen (NT/A) ausgetauschten Signale ATM-Informationssignale sind.

## Claims

1. Circuit arrangement for controlling the transmission of information for interactive services, having a network structure which has a network control centre (TMN) and into which at least one network node (ATMS), at least one service device (VS) as well as at least one connection unit (CU) (which is connected to a plurality of network access devices (NT/A) and to subscriber devices associated with them) are inserted, in which case information is transmitted, at least in sections, using a standard channel grid, between the at least one service device (VS) and at least one of the plurality of subscriber devices,
characterized
in that the transmission of the information between the respective service devices (VS) and the respective subscriber device is controlled by in each case one peripheral control device (TDC, TDN) which is provided in the at least one connection unit (CU) as well as in the network terminating device (NT/A) associated with the respective subscriber device.

2. Circuit arrangement according to Claim 1, characterized in that, depending on the transmission direction, the peripheral control device (TDC) of the at least one connection unit (CU), or the peripheral control device (TDN) of the respective network terminating device (NT/A) respectively, assigns the information to be transmitted to free transmission channels, and inserts this information into these channels, and
in that the assignments are on the one hand stored in tables provided for this purpose in the peripheral control device (TDC) and, on the other hand, are reported via internal channels to the other peripheral control device (TDN), at which point the latter sets an associated internal transmitting or receiving device, respectively, to these transmission channels.

3. Circuit arrangement according to Claim 1,
characterized
in that, depending on the transmission direction, the peripheral control device (TDC) of the at least one connection unit (CU), or the peripheral control device (TDN) of the respective network terminating device (NT/A) respectively, sets an associated receiving device to that transmission channel which, at the start of the transmission, contains the associated information, on the basis of cyclic interrogation of all the transmission channels.

4. Circuit arrangement according to Claim 1, 2 or 3,
characterized
in that the at least one service device is a video server (VS).

5. Circuit arrangement according to Claim 1,
characterized
in that the network structure between the at least one connection unit (CU) and the plurality of network terminating devices (NT/A) is a coaxial network (KN), based on a tree structure, with an optical feeder path.

6. Circuit arrangement according to Claims 1 to 5,
characterized
in that the information originating from the service device (VS) is ATM information signals.

7. Circuit arrangement according to Claim 6,
characterized
in that the signals interchanged between the at least one connection unit (CU) and the plurality of network terminating devices (NT/A) are ATM information signals.

## Revendications

1. Circuit pour commander la transmission d'informations pour des services interactifs, avec une structure de réseau comportant un centre de contrôle du réseau (TMN), dans laquelle sont insérés au moins un noeud (ATMS), au moins un dispositif de services (VS) et au moins une centrale de connexion (CU) reliée à une pluralité de dispositifs terminaux (NT/A) ainsi qu'à des terminaux d'abonné qui y sont affectés, des informations étant transmises, au moins sur des sections partielles, dans une trame homogène de canaux entre au moins un dispositif de services (VS) et au moins un des dispositifs de la pluralité de dispositifs d'abonné,
**caractérisé par le fait**
que la commande de la transmission des informations entre chaque dispositif de services (VS) et chaque dispositif d'abonné est exécutée par le dispositif périphérique respectif de commande (TDC, TDN) prévu au moins dans une centrale de connexion (CU) ainsi que dans le dispositif terminal (NT/A) affecté au dispositif respectif d'abonné.

2. Circuit selon la revendication 1
**caractérisé par le fait**
que, en fonction du sens de transmission, le dispositif périphérique de commande (TDC) d'au moins une centrale de connexion (CU) ou le dispositif périphérique de commande (TDN) du dispositif terminal respectif (NTIA) affecte les informations à transmettre à des canaux de transmissions libres et les injecte dans ces canaux et que les affectations sont d'une part enregistrées dans des tableaux prévus à cet effet dans le dispositif périphérique de commande (TDC) et, d'autre part, communiquées, par des canaux internes, à l'autre dispositif périphérique de commande (TDN), à la suite de quoi celui-ci règle un dispositif interne d'émission ou de réception correspondant sur ces canaux de transmission.

3. Circuit selon la revendication 1
**caractérisé par le fait**
que, en fonction du sens de transmission, le dispositif périphérique de commande (TDC) d'au moins une centrale de connexion (CU) ou le dispositif périphérique de commande (TDN) du dispositif terminal respectif (NT/A) règle un dispositif de réception correspondant sur le canal de transmission qui renferme, au début de la transmission, suivant une interrogation cyclique de tous les canaux de transmission, les informations respectives.

4. Circuit selon la revendication 1, 2 ou 3
**caractérisé par le fait**
que au moins un dispositif de services est un serveur vidéo (VS).

5. Circuit selon la revendication 1
**caractérisé par le fait**
que la structure de réseau entre au moins une centrale de connexion (CU) et la pluralité de dispositifs terminaux (NT/A) est un réseau coaxial (KN) à structure arboriforme avec une section optique d'alimentation.

6. Circuit selon la revendication 1 à 5
**caractérisé par le fait**
que les informations partant du dispositif de services (VS) sont des signaux d'information ATM.

7. Circuit selon la revendication 6
**caractérisé par le fait**
que les signaux échangés entre au moins une centrale de connexion (CU) et la pluralité de dispositifs terminaux (NTIA) sont des signaux d'information ATM.
